# EUROPEAN PATENT APPLICATION

(11) **EP 1 582 173 A1**
(43) Date of publication of application: **05.10.2005**
(21) Application number: 05005285.1
(22) Date of filing: 10.03.2005
(51) Int. Cl.: A61C 8/00

(54) **Dental implant**

(30) Priority: 29.03.2004 JP 2004094816
(71) Applicant: GC Corporation, Tokyo 174 (JP)
(72) Inventor: Kojima, Norio, Itabashi-ku Tokyo 174 (JP); Watanabe, Kiyoshi, Itabashi-ku Tokyo 174 (JP)
(74) Representative: Müller-Boré & Partner Patentanwälte

(57) **Abstract**

To provide a fixture of a dental implant capable of acquiring osseointegration in an early stage, keeping a quiet state by sufficient initial stability with a jawbone at the time of the placing, and contributing to improve dental implant treatment results, in the fixture of the dental implant, a cylindrical collar part 1b includes a recessed or projected polygonal formed part 1a at a center of an intraoral side end or a truncated pyramid type abutment part 1a' at the intraoral side end, a male screw 1c is provided to a top end of the outer periphery of an opposite intraoral side of the cylindrical collar part 1b, and an incomplete screw part 1f adjacent to said cylindrical collar part 1b of said male screw 1c has a root diameter smaller than a crest diameter D of a complete screw part and larger than a root diameter d of the complete screw part.

## Description

### BACKGROUND OF THE INVENTION

### Field of the Invention

The present invention relates to a fixture of a dental implant used for dental implant treatment. More particularly, the fixture of a dental implant can acquire osseointegration in an early stage, and has increased stability with a jawbone at the time of a placing, and thus contributes to improve dental implant treatment results.

### Description of the Conventional Art

While it is long time after the dental implant treatment is employed as a prosthetic treatment, it is confirmed that this dental implant treatment has a high success rate, and thus this treatment is established as one of the choices of the dental treatment.

In the dental implant treatment, a fixture is placed in a placing hole formed at the jawbone, and a dental prosthesis is fixed at an intraoral side of the fixture directly or through an upper structure. It is important at this time that the fixture is strongly fixed at the jawbone. In "osseointegration phenomemon, in which titanium or titanium alloy is integrated with bone was discovered and the sufficient fixing state could be established by the application of it, the success rate of the implant treatment was remarkably increased.

However, it is necessary to satisfy various conditions in a clinical view point, in order to certainly obtain osseointegration, and one of these conditions is avoiding the fixture movement immediately after placing the fixture. That is, since the surrounding bone is wounded by the fixture placing operation, it is simultaneously required to heal the wounded bone to have a normal tissue, and to acquire the preferable osseointegration between the fixture and the bone. Thus, it is necessary to make the fixture into quiet in the wound healing process and osseointegration process. When the fixture is moved, a biological reaction causing the emergence of fibroblasts between the wounded part or bone and the fixture is generated, and thus osseointegration cannot be obtained. Therefore, the sufficient initial stability is needed immediately after placing the fixture.

Therefore, as for a design of the fixture for acquiring the initial stability, a fixture in which a male screw is provided at an outer periphery of the fixture to be placed into the jawbone is widely used and a method for fixing the fixture at the jawbone by using a screw fastening effect is used.

However, in such the case that the fixture is fixed with the jawbone by using the screw fastening effect, an incomplete screw part as a transition part of the screw exists between a cylindrical collar part and a male screw part at the outer periphery of the fixture, where the cylindrical collar part is provided at the intraoral side of the fixture and the male screw part is adjacent to the cylindrical collar part.

Since a method for fastening the incomplete screw part without interference with respect to a female screw hole is required, where the female screw hole is threaded at the jawbone by a tap beforehand or by self tapping, the incomplete screw part is designed in many cases such that a releasing groove having a smaller diameter than the root diameter of a complete screw is provided at the incomplete screw part provided at the intraoral side of the fixture to prevent the interference with the crest diameter of the female screw hole provided at the jawbone. However, since such the treatment of the incomplete screw part is to remove a screw thread at a part of the releasing groove, the female screw hole provided at the jawbone does not contact with the fixture at the part of the releasing groove. Thus, this treatment causes the reduction of fixing force of the fixture with respect to the jawbone, so that it is not preferable.

Then, as a method for limiting the reduction of the fixing force of the fixture with respect to the jawbone at the incomplete screw part provided at the intraoral side of the fixture, to be minimum, a screw type fixing element (for example, referring to published Japanese translations of PCT international publication for patent applications No. 08-510400) is proposed. The screw type fixing element includes a cylindrical groove having a form of the thread cutting dies between the cylindrical collar part and the male screw part which is adjacent to the cylindrical collar part.

However, as for the fixture such as the screw type fixing element including the cylindrical groove having the form of the thread cutting dies, the reduction of the screw thread at the incomplete screw part is prevented, but the crest diameter of the screw thread is gradually converged to the root diameter toward the cylindrical collar part. Thus, as the crest diameter of the screw thread is gradually converged to the root diameter, the contact of the male screw crest diameter part of the incomplete screw part with the female screw root diameter part provided at the jawbone is interrupted, so that the incomplete screw part does not contribute to fix the fixture. Therefore, such the incomplete screw part of the fixture contributes to fix the fixture by only contacting the root diameter part of the screw thread with the crest diameter part of the female screw provided at the jawbone.

However, when a moment of a lateral load acting at a right angle to an axial direction of the fixture is considered, the fixture can bear large lateral load when having the long length from an axial center thereof to a outer periphery part contacting with the jawbone, so that contribution of the crest diameter of the male screw is large. Further, an opposite side to the intraoral side of the fixture is hardly moved since this side is placed in the jawbone, but the intraoral side of the fixture has a weak restriction in the right angle direction to the axial direction. Thus, as a result of this, a surface layer part of the jawbone corresponding to the incomplete screw part receives a large stress by the lateral load. Further, when vertical load acts in parallel to the axial direction of the fixture, a load at a cortical bone part, which is a fine and hard bone layer having a high bone density, has high resistance to the movement so that the contact of the jawbone with the screw thread at the intraoral side part influences greatly to the stability of the fixture. Thus, the intraoral side part is an important part for the statility of the fixture.

Further, a space between the jawbone and the fixture is a healing space, and a size of this space influences to the promotion of the healing and osseointegration after the healing, and thus it is important to minimize this space for the early osseointegration. Further, as mentioned above, the incomplete screw part is positioned at the surface layer part of the bone corresponding to the cortical bone part, which is the fine and hard bone layer having the high bone density, and thus has large contribution as a resistance source to the movement. Therefore, it is important to minimize the space at the incomplete screw part.

### Summary of the Invention

The primary objective of the present invention is to provide the fixture of the dental implant capable of acquiring osseointegration in an early stage after placing the implant, and keeping a quiet state by a sufficient initial fixing at the time of the placing.

The earnest work was carried out in order to solve the above-mentioned problems and, as a result of this, it was found out that the following fixture of the dental implant is preferable to more effectively contact the incomplete screw part adjacent to the cylindrical collar part of the male screw with the jawbone. In such the fixture of the dental implant being provided with a cylindrical collar part having a recessed or projected polygonal formed part at a center of an intraoral side end or a truncated pyramid type abutment part at the interaoral side end, with the male screw being provided to a top end of the outer periphery of an opposite intraoral side of the cylindrical collar part, the incomplete screw part of the fixture is made to have a root diameter being smaller than a crest diameter of the complete screw part and larger than a root diameter of the complete screw part. Then, the investigation was completed.

That is, the present invention relates to the fixture of the dental implant, in which the cylindrical collar part is provided, this cylindrical collar part includes the recessed or projected polygonal formed part at the center of the intraoral side end or the truncated pyramid type abutment part at the intraoral side end, and the male screw is provided to a top end of the outer periphery of an opposite intraoral side of the cylindrical collar part, wherein the incomplete screw part adjacent to the cylindrical collar part of the male screw has the root diameter being smaller than the crest diameter of the complete screw part and larger than a root diameter of the complete screw part.

In such the fixture of the dental implant, when the recessed or projected polygonal formed part is provided at the center of the intraoral side end of the cylindrical collar part, the fixture is preferably used for the conventional dental implant treatment, in which a dental prosthesis is fixed with an intermediate bolt screwed into the fixture through an abutment cylinder, by providing the female screw having the same axis as the recessed or projected polygonal formed part and having an end closing toward the opposite intraoral side from the polygonal formed part side. Further, when the a groove for self tap is provided at the top end part of the opposite intraoral side of the male screw, or a whole surface of the male screw or a surface except one part at the cylindrical collar part side of the male screw is processed by a surface-roughening treatment, it is preferable for strongly fixing the fixture and the jawbone from the early stage of the placing.

As for the fixture of the dental implant according to the present invention having the above constitution, immediately after placing the fixture into the placing hole formed at the jawbone, a root part of the incomplete screw part of the fixture stresses a crest part of the female screw, which is formed at the jawbone in the form corresponding to the complete screw part of the fixture screwed into the placing hole, at a part of the fixture positioned at the cortical bone of the jawbone. Thus, a stress is given to a part of the fixture positioned at the cortical bone of the jawbone from immediately after placing the fixture into the placing hole formed at the jawbone, so that the initial stability is improved and the space between the cortical bone of the jawbone and the fixture is decreased. Thereby, the fixture of the dental implant according to the present invention contributes to the early healing of the bone and early osseointegration.

Further, in such the fixture of the dental implant, when the recessed or projected polygonal formed part is provided at the center of the intraoral side end of the cylindrical collar part, and the female screw having the same axis as the recessed or projected polygonal formed part and having the end closing toward the opposite intraoral side from the polygonal formed part side is provided, the fixture is preferably used for the conventional dental implant treatment, in which the dental prosthesis is fixed with the intermediate bolt screwed into the fixture through the abutment cylinder. Further, when the truncated pyramid type abutment part is provided at the intraoral side of the cylindrical collar part, the fixture can be used for the dental implant treatment of fixing the dental prosthesis with dental adhesives. When the groove for self tap is provided at the top end part of the opposite intraoral side end of the male screw and, the diameter of the hole is formed to be smaller than the root diameter of the complete screw part, chips of the jawbone cut off are stored in the groove for the self tap at the top end part of the opposite intraoral side end of the male screw at the time of placing the fixture into the placing hole formed at the jawbone, so that the female screw can be automatically formed at the jawbone. As a result, the screw engagement of the complete screw part of the fixture with the female screw hole formed at the jawbone can be reinforced from the initial stage of the placing. Further, when the whole surface of the male screw or the surface except one part at the cylindrical collar part side of the male screw is processed by the surface-roughening treatment, the fixing between the fixture and the jawbone can be reinforced more from the initial stage of the placing by frictional force due to the surface-roughening treatment.

### DETAILED DESCRIPTION OF PREFERRED EMBODIMENT

Hereinafter, the fixture of the dental implant according to the present invention is explained concretely with drawings.

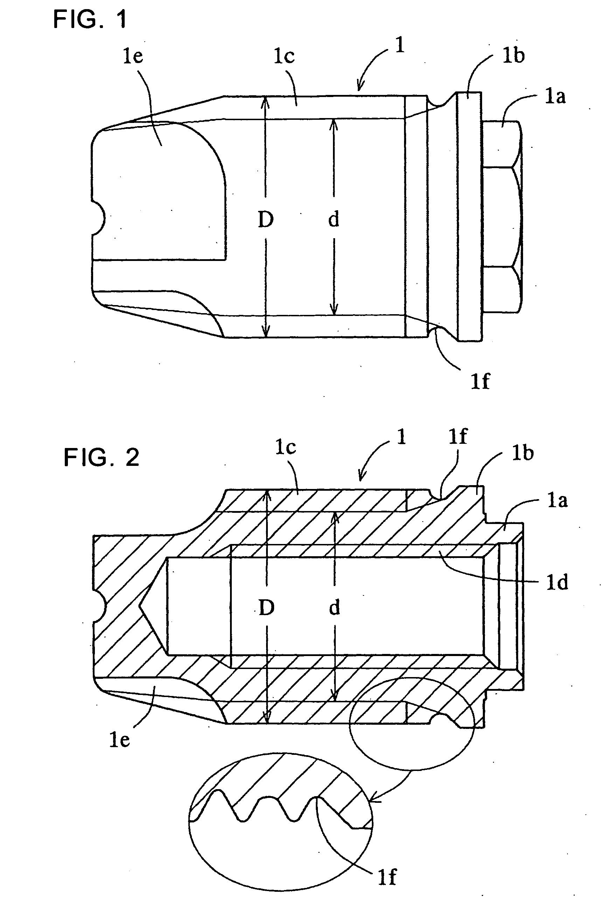

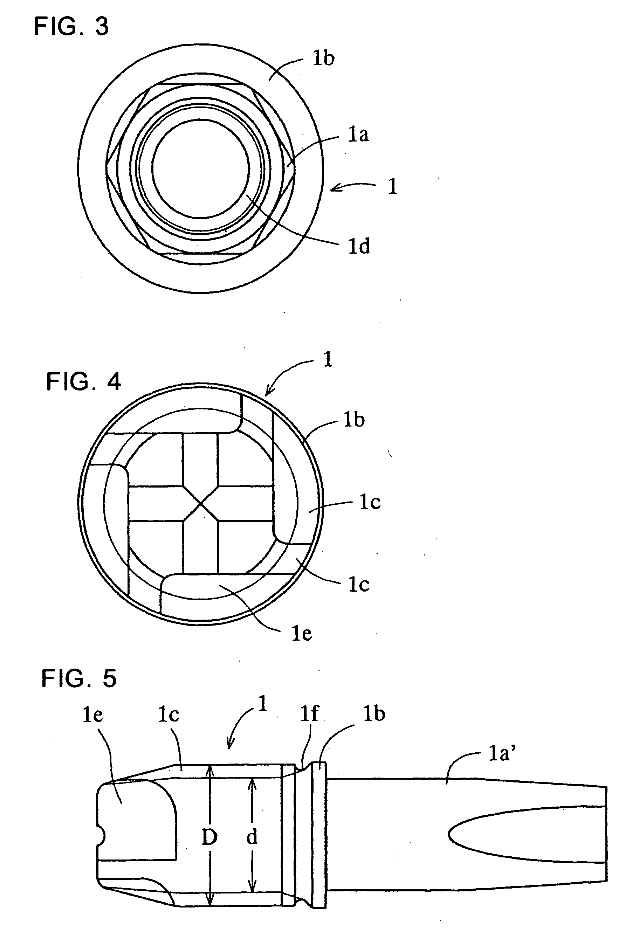

Figure 1 is a front view of one example of the fixture of the dental implant according to the present invention. Figure 2 is a cross sectional view taken along a central line of Figure 1. Figure 3 is a plan view of Figure 3. Figure 4 is a bottom view of Figure 1. Figure 5 is a front view of another example of the fixture of the dental implant according to the present invention.

In these figures, 1 is a fixture of a dental implant according to the present invention. In the fixture 1, a cylindrical collar part 1b is provided and includes a recessed or projected polygonal formed part 1a at a center of the intraoral side end, or a truncated pyramid type abutment part 1a' at the intraoral side end. A male screw 1c is provided to a top end on the outer periphery of an opposite intraoral side of the cylindrical collar part 1b. Further, when the recessed or projected polygonal formed part 1a is provided at a center of the intraoral side end of the cylindrical collar part 1b, a female screw 1d having the same axis as the recessed or projected polygonal formed part 1a and having an end closing toward the opposite intraoral side from the polygonal formed part side is provided in many cases. Further, it is preferable that a groove 1e for self tap is provided at a top end part of an opposite intraoral side end of the male screw 1c.

In the fixture 1 of the dental implant according to the present invention, an incomplete screw part 1f which is adjacent to the cylindrical collar part 1b of the male screw 1c has a root diameter being smaller than a crest diameter D of a complete screw part and larger than a root diameter d of the complete screw part. Further, it is preferable that a whole surface of the male screw 1c or a surface except one part at the cylindrical collar part 1b side of the male screw 1c is processed by the surface-roughening treatment.

At the time of placing such the fixture 1 of the dental implant according to the present invention into the jawbone, when the groove 1e for the self tap is not provided at the top end part of the opposite intraoral side end of the screw 1c, it is preferable that an placing hole having the same or slightly smaller diameter than the root diameter d of the male screw 1c is threaded at the jawbone and the female screw is provided by a tapping jig corresponding to the male screw 1b of the fixture 1. Further, when the groove 1e for the self tap is provided at the top end part of the opposite intraoral side end of the screw 1c of the fixture 1, it is preferable that the placing hole having the same or slightly smaller diameter than the root diameter d of the male screw 1c of the fixture 1 is threaded at the jawbone.

Then, the fixture is placed into the placing hole while rotating. At this time, when the groove 1e for the self tap is not provided at the top end part of the opposite intraoral side end of the screw 1c of the fixture 1, the male screw 1c of the fixture 1 is screwed to the female screw threaded at the jawbone until a prescribed depth. Further, when the groove 1e for the self tap is provided at the top end part of the opposite intraoral side end of the screw 1c of the fixture 1, the male screw 1c of the fixture 1 is threaded to the prescribed depth while automatically tapping the female screw at the placing hole provided in the jawbone by the male screw 1c of the fixture. The chips of the jawbone cut off at this time are stored in the groove 1e for the self tap provided at the top end part of the opposite intraoral side end of the screw 1c of the fixture 1. In such the operation, when the whole surface of the male screw 1c or the surface except one part at the cylindrical collar part 1b side of the male screw 1c is processed by the surface-roughening treatment, the fixing between the fixture and the jawbone can be reinforced from the initial stage of the placing by the frictional force due to the surface-roughening treatment.

When the male screw 1c of the fixture 1 is screwed into the jawbone up to the prescribed depth in this way, the incomplete screw part 1f positioned between the cylindrical collar part 1b at the intraoral side of the fixture 1 and the male screw 1c is placed at a position corresponding to the cortical bone of the jawbone. However, just before screwing the incomplete screw part 1f into the position corresponding to the cortical bone of the jawbone, the female screw, which has a same crest diameter D and root diameter d as those of the complete screw part of the male screw 1c being already screwed into the jawbone, is already formed at the position corresponding to the cortical bone of the jawbone. Further, when the incomplete screw part 1f is screwed into the position corresponding to the cortical bone of the jawbone, since the incomplete screw part 1f has the root diameter being smaller than the crest diameter D of the complete screw part and larger than the root diameter d of the complete screw part, the root diameter part of the incomplete screw part 1f stresses and deforms the crest diameter part of the female screw hole formed at the cortical bone of the jawbone and generates elastic force. Thus, the stressing effect is given to the part positioned at the cortical bone of the jawbone of the fixture 1 from immediately after placing the fixture 1 into the placing hole formed at the jawbone. Therefore, the initial stability is improved, and the space between the cortical bone of the jawbone and the fixture 1 is decreased, and thus the fixture 1 contributes to the early healing of the bone and early osseointegration.

That is, in the implant treatment, at the same time when the fixture is placed into the placing hole formed at the jawbone, the surrounding bone is stressed, so that the stability is improved by the elastic force of the surrounding bone. Especially, in the case that the stressed part is the cortical bone part, which is a topmost surface part of the intraoral side and the fine and hard bone layer having the high bone density, the improving effect of the stability is high. Therefore, in the present invention, the root diameter of the incomplete screw part 1f adjacent to the cylindrical collar part 1b is larger than the root diameter d of the complete screw part, and thus the improving effect of the stability of the fixture 1 with the jawbone by the stress is remarkable. Further, when the root diameter of the cylindrical collar part 1b side provided at a terminal end of the incomplete screw part 1f, is more close to the crest diameter D of the complete diameter, the decreasing amount at a top of the crest diameter of the incomplete screw part 1f is more decreased, and the contact of the root part with the bone in the incomplete screw part 1f increases, and thus the stability is further improved.

Further, as for the space generated between the incomplete screw part 1f adjacent to the cylindrical collar part 1b and the complete screw part formed at the cortical bone part of the jawbone, when the space is large, the period of the healing of the wounded bone and osseointegration thereafter becomes long, and thus it is required to have the small space. When the root diameter provided at the terminal end of the incomplete screw part 1f is more close to the crest diameter D of the complete screw part, the decreasing amount at the top of the crest diameter of the incomplete screw part 1f is more decreased, and thus it becomes more advantageous.

Further, the force to the jawbone by the lateral load is concentrated in the intraoral side of the jawbone, where the lateral load acts to the fixture 1 at the right angle with respect to the axial direction of the fixture 1. Thus, when the fixture 1 is stressed by the cortical bone part, which is the topmost surface part of the intraoral side and the fine and hard bone layer having the high bone density, the stability to the jawbone of the fixture 1 is improved. Further, although the force to the jawbone by the vertical load acting in parallel in the axial direction of the fixture 1 is supported by the whole of jawbone, when the fixture 1 is stressed by the cortical bone part, which is the topmost surface part of the intraoral side and the fine and hard bone layer having the high bone density, the load to the other part of jawbone except the cortical part can be decreased.

Therefore, the fixture 1 of the dental implant according to the present invention can increases the stability by stressing the cortical part of the jawbone by the incomplete screw part 1f of the fixture 1, and can acquire early osseointegration by decreasing the healing space generated between the incomplete screw part 1f of the fixture 1 and the cortical bone part of the jawbone, whereby the successful implant treatment can be achieved by the fixture 1.

## Claims

1. A fixture(1)of a dental implant in which a cylindrical collar part (1b) is provided,
said cylindrical collar part(1b) includes a recessed or projected polygonal formed part (1a) at a center of an intraoral side end or a truncated pyramid type abutment part (1a') at the intraoral side end,
and a male screw (1c)is provided to a top end of the outer periphery of an opposite intraoral side of the cylindrical collar part (1b),
wherein an incomplete screw part (1f) adjacent to said cylindrical collar part (1b) of said male screw(1c) has a root diameter being smaller than a crest diameter (D)of a complete screw part and larger than a root diameter (d)of the complete screw part.

2. The fixture (1) of the dental implant according to Claim 1,
wherein the recessed or projected polygonal formed part (1a)is provided at the center of the intraoral side end of the cylindrical collar part (1b), a female screw (1d) having the same axis as said recessed or projected polygonal formed part (1a) and having an end closing toward the opposite intraoral side from said polygonal formed part (1a) side is provided.

3. The fixture(1)of the dental implant according to Claim 1 or Claim 2,
wherein a groove (1e) for self tap is provided at a top end part of the opposite intraoral side end of the male screw (1c).

4. The fixture 1 of the dental implant according to any one of Claim 1 to Claim 3,
wherein a whole surface of the male screw(1c) or a part except a part at the cylindrical collar part (1b) side of the male screw(1c) is processed by a surface-roughening treatment.
